# EUROPÄISCHE PATENTSCHRIFT

(11) **EP 0 365 810 B1**
(45) Veröffentlichungstag und Bekanntmachung des Hinweises auf die Patenterteilung: **05.01.1994**
(21) Anmeldenummer: 89116835.3
(22) Anmeldetag: 12.09.1989
(51) Int. Cl.: F16L 5/00

(54) **Gebäudeeinführungsarmatur für eine Gas- oder Wasserzufuhrleitung**
Armature of a building inlet for a gas or water supply pipe
Armature d'une introduction dans un bâtiment pour conduits de gaz ou d'eau

(30) Priorität: 24.10.1988 DE 3836157
(43) Veröffentlichungstag der Anmeldung: 02.05.1990
(73) Patentinhaber: GEBO-ARMATUREN GmbH, 58332 Schwelm (DE)
(72) Erfinder: Rose, Heinrich, W-4630 Bochum 7 (DE)
(74) Vertreter: Finkener und Ernesti Patentanwälte

(56) Entgegenhaltungen:
- DE-A- 3 122 000
- DE-A- 3 702 692
- DE-B- 2 716 366
- GB-A- 2 074 701
- US-A- 3 787 067

## Beschreibung

Die Erfindung betrifft eine Armatur zum Einführen einer Gas- oder Wasserzufuhrleitung in ein Gebäude gemäß dem Oberbegriff des Patentanspruchs 1.

Aus der EP-B 0 040 791 ist eine Hauseinführung bekannt mit einem in der Hauswand gehaltenen metallischen Schutzrohr, welches ein Zufuhrrohr aus Kunststoff umschließt, das im Innern des Gebäudes mit einem am Ende des Schutzrohres gehaltenen metallischen Übergangsstück verbunden ist, an das die Gebäudeleitung anschließbar ist. Zur mediumdichten Verbindung des Kunststoffrohres mit dem Übergangsstück ist an diesem eine von außen zugängliche Verschraubung vorgesehen. Im Falle einer durch Zugeinwirkung hervorgerufenen überdehnung des Kunststoffrohres, durch die ein Leck entstehen kann, soll das Schutzrohr ein Eindringen von Medium, insbesondere Gas, in das Gebäudeinnere verhindern. Da jedoch Schäden dieser Art an der Hauseinführung im Innern des Gebäudes nicht erkennbar sind, besteht die Gefahr, daß Medium über längere Zeit unerkannt entweicht. Handelt es sich dabei um eine Gaszufuhrleitung, kann ein solcher Schadensfall einen Brand oder eine gefährliche Explosion hervorrufen.

Zum Verbinden von erdverlegten Gas- oder Wasserrohren ist aus der DE- A 31 22 000 eine Verbindungsmuffe bekannt, bei der Absperrmittel vorgesehen sind, die bei einem ungewollten Auseinanderziehen der Rohre selbsttätig eine Absperrung des mediumführenden Rohres bewirken. Die Verbindungsmuffe ist an ihrem einen Ende mit dem mediumführenden Rohr fest verbunden, während sie am entgegengesetzten Ende das andere Rohr koaxial abgedichtet aufnimmt. Dabei ist am Mündungsende des Innenrohres ein Verschlußkörper angebracht, der bei einem ungewollten Herausziehen des Innenrohres in eine abdichtende Stellung bewegt wird. Für eine Verwendung als Hauseinführung ist diese Verbindungsmuffe nicht gedacht und auch nicht geeignet. Da sie sich im Erdreich befindet, ist eine laufende Überprüfung auf ihren jeweiligen Betriebszustand nicht möglich.

Außerdem ist es durch die DE-B 27 16 366 bekannt, am Kraftstoffbehälter eines Kraftfahrzeuges eine Sicherheits-Absperrvorrichtung anzubringen, die auf die bei einem Unfall wirkenden Kräfte anspricht und ein automatisches Verschließen der Kraftstoffleitung bewirken soll. Dabei ist in der Wand des Kraftstoffbehälters eine diese durchsetzende Außenhülse befestigt, in der ein verschiebbarer Leitungsabschnitt, der mit der Motorleitung verbunden ist, geführt ist. In der Normallage fluchten zwei Wandungsbohrungen für den Durchtritt des Kraftstoffes. Bei einem heftigen Stoß oder Schlag auf das Kraftfahrzeug, kann das innere Rohrstück in die Außenhülse eingedrückt oder aus ihr herausgezogen werden, wodurch das Abfließen von Kraftstoff verhindert wird. Bei dieser Absperrvorrichtung kommt es nicht darauf an, daß sie auf ihren jeweiligen Betriebszustand überprüfbar ist.

Die Aufgabe der Erfindung besteht darin, eine Armatur zum Einführen einer Gas- oder Wasserzufuhrleitung in ein Gebäude zu schaffen, bei der zum einen Vorkehrungen getroffen sind, die im Fall einer ungewollten Herausziehbewegung der mediumführenden Leitung eine selbsttätige Absperrung derselben bewirken, die zum anderen ohne Schwierigkeiten auf ihren jeweiligen Betriebszustand kontrollierbar ist, und die ferner eine dauerhafte Abdichtung mit einfachen und bewährten Dichtmitteln ermöglicht sowie insgesamt kostengünstig herstellbar ist.

Ausgehend von einer Armatur der eingangs beschriebenen Art wird diese Aufgabe erfindungsgemäß dadurch gelöst, daß das Mündungsende des ebenfalls aus Metall bestehenden Innenrohres als Topfkolben mit wenigstens einer Querbohrung ausgebildet ist, daß der Topfkolben im Schutzrohr vor und hinter der Querbohrung abgedichtet axial beweglich geführt ist, daß er in seiner Ausgangsstellung (Offenstellung) mit seiner Querbohrung mit einer Wandungsöffnung im Schutzrohr, an die die Gebäudeleitung anschließbar ist, in Verbindung steht, daß vom Kopf des Topfkolbens eine Kolbenstange ausgeht, die in einer öffnung einer stirnseitigen Abschlußwand des Schutzrohres abgedichtet geführt ist, daß die Kolbenstange eine endseitige Anschlagplatte aufweist, deren Abstand von der Anschlagfläche am Schutzrohr in der Ausgangsstellung des Topfkolbens größer ist als der Verschiebeweg des Topfkolbens aus der Ausgangs- in die Schließstellung, und daß an der Kolbenstange an ihrem freien Ende eine in Achsrichtung sich erstreckende Skala zur Stellungsanzeige angebracht ist.

Die durch die Erfindung erzielbaren Vorteile beruhen im wesentlichen auf der Anwendung eines mit der mediumführenden Leitung fest verbundenen Kolbens als Absperrorgan. Bewegt sich dieser Kolben als Folge einer Zug- oder Druckeinwirkung auf das erdverlegte Zufuhrrohr gegenüber dem feststehenden Schutzrohr aus seiner Offenstellung in die eine oder andere Richtung, so wird (nach einem entsprechenden Verschiebeweg) das mediumführende Innenrohr selbsttätig abgesperrt. Auf diese Weise wird ein unerwünschtes Entweichen von Medium verhindert, was vor allem bei dem Medium Gas wegen der damit verbundenen Brand- und Explosionsgefahr außerordentlich wichtig ist.

Als weiterer Vorteil kommt hinzu, daß die Gebäudeeinführungsarmatur hinsichtlich ihres Betriebszustands im Innern des Gebäudes jederzeit ohne weiteres kontrollierbar ist. Erreicht wird dies durch die von dem Kolben ausgehende und mit ihrem freien Ende nach außen geführte Kolbenstange. Da hierbei auch Zwischenstellungen der Kolbenstange durch bloße Sichtkontrolle erkennbar sind, bedeutet dies, daß auch Vorgänge feststellbar sind, bei denen durch äußere Belastungen auf die Zufuhrleitung möglicherweise nur geringe Verschiebungen aufgetreten sind, die nicht zu einer Absperrung geführt haben. Ursache für Krafteinwirkungen dieser Art können vorübergehende oder länger anhaltende Erdbewegungen sein. In solchen Fällen besteht somit die Möglichkeit, durch laufende Sichtkontrollen den Betriebszustand der Gebäudeeinführungsarmatur zu überwachen, um gegebenenfalls rechtzeitig Gegenmaßnahmen einleiten zu können.

Vorteilhafte Weiterbildungen des Erfindungsgegenstandes ergeben sich aus den Unteransprüchen. So ist es beispielsweise zweckmäßig, die Kolbendichtungen aus in der Innenwandung des Schutzrohres vor und hinter der Wandungsöffnung befindlichen Ringnuten und je einem in diesen gehaltenen Dichtring aus elastischem Material zu gestalten.

Weiterhin ist es vor allem aus Herstellungsgründen vorteilhaft, einen selbständigen Topfkolben zu verwenden und diesen mit seinem offenen Endabschnitt formschlüssig auf das Innenrohr aufzusetzen und an diesem durch Verschweißen zu befestigen. Dabei ist es weiterhin vorteilhaft, Topfkolben und Kolbenstange einteilig auszubilden.

Zur Abdichtung des Innenrohres am äußeren Ende des Schutzrohres wird vorteilhafterweise ein Schraubring benutzt, der mittels Außengewinde in einem entsprechenden Innengewinde des Schutzrohres gehalten ist, wobei dieser Schraubring zur Abdichtung wenigstens eine Ringnut aufweist, In der ein auf die Mantelfläche des Innenrohres einwirkender elastischer Dichtring einliegt.

Für die konstruktive Gestaltung der Kolbenstangendurchführung ist es zweckmäßig, an der stirnseitigen Abschlußwand des Schutzrohres einen Stutzen mit Gewinde anzubringen oder anzuformen, bei dem zwischen Stutzen und Kolbenstange ein Ringspalt für die Aufnahme einer Dichtung aus feuerfestem Material frei gelassen ist, die mit Hilfe einer Mutter, wie beispielsweise eine überrwurfmutter, axial zusammendrückbar ist.

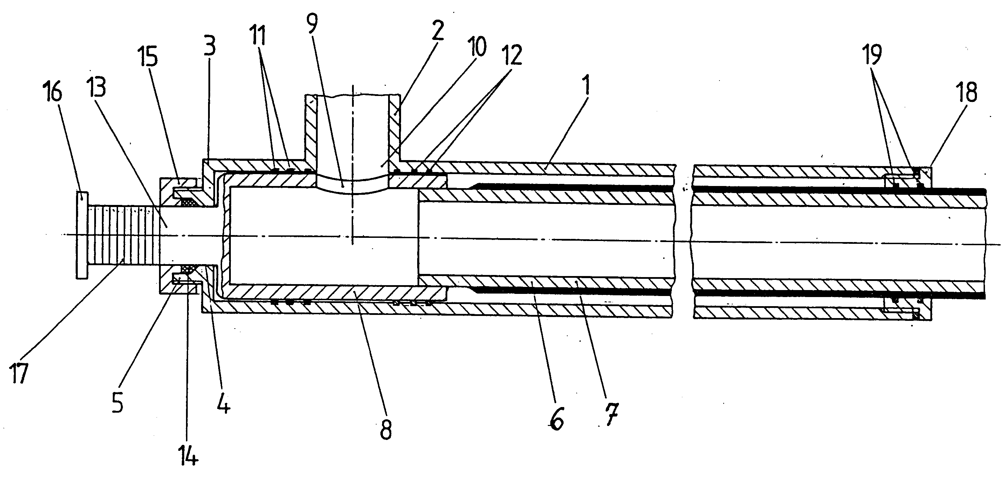

Ein Ausführungsbeisplel einer erfindungsgemäßen Gebäudeeinführungsarmatur wird nachfolgend anhand der Zeichnung näher erläutert. Die einzige Figur der Zeichnung zeigt das Ausführungsbeispiel in einem Axialschnitt.

Die in der Zeichnung dargestellte Gebäudeeinführungsarmatur enthält ein metallisches Schutzrohr (1), dessen Länge größer ist als die Wandstärke des Gebäudes. Mit diesem Schutzrohr (1) ist die Armatur im Mauerwerk verankert. Im Inneren des Gebäudes ragt das Schutzrohr (1) aus der Wand heraus, wobei an dem überstehenden Abschnitt ein radial stehender Anschlußstutzen (2) angebracht ist, der für den Anschluß der Gebäudeleitung mit einem nicht dargestellten Außengewinde versehen sein kann. Am inneren Ende des Schutzrohres (1) ist eine Scheibe (3) als Abschlußwand angeschweißt, die eine konzentrische öffnung (4) und einen angeformten Stutzen (5) mit Außengewinde aufweist.

Das Schutzrohr (1) umschließt ein konzentrisches Innenrohr (6), welches mit einer korrosionsbeständigen Schicht (7), z.B. aus Polyäthylen, ummantelt ist. Auf die Stirnseite des Innenrohres (6) ist ein Topfkolben (8) formschlüssig aufgesetzt, der mit dem Innenrohr (6) durch Verschweißen festverbunden ist. Der Außendurchmesser des Topfkolbens (8) ist geringfügig kleiner als der Innendurchmesser des Schutzrohres (1), so daß der Topfkolben (8) im Schutzrohr (1) axial leichtgängig bewegbar ist.

In der Zylinderwandung des Topfkolbens (8) ist an einer Stelle eine Querbohrung (9) mit etwa gleichem Durchmesser wie der Innendurchmesser des Anschlußstutzens (2) enthalten, die sich bei der voll eingeschobenen Stellung des Innenrohres (6) gemäß der zeichnerischen Darstellung mit der Durchgangsöffnung des Anschlußstutzens (2) deckt. Die Abdichtung des Topfkolbens (8) gegen das Schutzrohr (1) ist bei dem Ausführungsbeispiel durch vor und hinter der Wandungsöffnung (10) vorgesehene elastische Dichtringe (11) bewirkt, die in Ringnuten (12) an der Innenwandung des Schutzrohres (1) teilweise einliegen und in diesen gehalten sind. Am Kopf des Topfkolbens (8) ist an diesem eine Kolbenstange (13) mit kreisrundem Querschnitt angeformt oder in geeigneter Weise befestigt, die die Bohrung (4) mit engem Spiel durchdringt und nach außen mit einer gewissen Lange gegenüber der Abschlußwand vorsteht.

Um an dieser Stelle eine einwandfreie Abdichtung des Innenraumes des Schutzrohrs (1) zu erreichen, ist in einem zwischen Stutzen (5) und Kolbenstange (13) freigelassenen Ringspalt eine Dichtkammer gebildet, in der eine Dichtung (14) aus hitzebeständigem Material einliegt. Mit Hilfe einer auf dem Außengewinde des Stutzens (5) gelagerten Überwurfmutter (15) kann durch Drehen derselben die Dichtung (14) in die Dichtkammer eingepreßt werden. Diese Abdichtung ist dann von Bedeutung, wenn die Kolbendichtung beispielsweise durch Hitzeeinwirkung nicht mehr gewährleistet sein sollte. In diesem Fall verhindert die äußere, hitzebeständige Dichtung ein ungewolltes Eindringen von Medium, insbesondere Gas, in das Innere des Gebäudes.

Am freien Ende der Kolbenstange (13) ist eine Anschlußplatte (16) angeschweißt oder durch Verschraubung befestigt. Auf dem freiliegenden Abschnitt der Mantelfläche der Kolbenstange (13) ist eine Skala (17) vorgesehen, die eine Stellungsanzeige des Topfkolbens im Vergleich zur Ausgangsstellung, die der Offenstellung entspricht, ermöglicht.

Auch am äußeren Endes des Schutzrohres (1) ist eine Abdichtung des Innenraumes vorgesehen. Zu diesem Zweck enthält das freie Ende ein Innengewinde zum Einschrauben eines Schraubringes (18), der an seiner inneren Mantelfläche zwei Ringnuten aufweist, in denen jeweils ein elastischer Dichtring (19) gehalten ist.

Die Zeichnung zeigt, wie bereits erwähnt, die Betriebsstellung der Gebäudeeinführungsarmatur, in der das Medium von außen ungehindert in die Gebäudeleitung eintreten kann.

Wird auf das außerhalb des Gebäudes verlaufende Anschlußrohr ein Zug ausgeübt, der eine Verschiebung des Topfkolbens (8) in einer Länge verursacht, die größer ist als der Durchmeser seiner Querbohrung (9), so wird der Durchgang zum Anschlußstutzen (2) versperrt und damit der Zufluß von Medium unterbunden.

Soweit auf das erdverlegte Zufuhrrohr nur mäßige Kräfte über einen längeren Zeitraum einwirken, beispielsweise als Folge von Erdbewegungen, wird der Topfkolben (8) dementsprechend nur geringfügig verschoben und zunächst den Durchfluß des Mediums zwar drosseln, aber nicht unterbinden. In einem solchen Fall ist das Ansprechen der Armatur an der Skala (17) an der Kolbenstange (13) vom Inneren des Gebäudes aus jeder Zeit feststellbar. Es können also erforderlichenfalls frühzeitig Maßnahmen ergriffen werden, bevor durch weiteres Verschieben des Topfkolbens (8) eine vollständige Absperrung eintritt.

Für die Beschreibung des Ausführungsbeispiels wurde der Einfachheit halber eine Armatur in einer Ausführung zugrundegelegt, die einen Schutz bietet, wenn auf die erdverlegte Leitung Zug ausgeübt wird, wie dies in der Praxis überwiegend der Fall ist. Soll jedoch die Gebäudeeinführungsarmatur auch bei eventuellen Schubbelastungen auf das erdverlegte Zufuhrrohr ansprechen können, so braucht lediglich zwischen dem Topfkolben (8) in der Offenstellung und der endseitigen Stirnwand des Schutzrohres (1) ein so großer axialer Abstand vorgesehen zu werden, daß der Topfkolben (8) weiter in das Innere des Schutzrohres (1) in einer Länge verschiebbar ist, die größer ist als der Durchmesser der Querbohrung (9) des Topfkolbens (8).

## Patentansprüche

1. Armatur zum Einführen einer Gas- oder Wasserzufuhrleitung in ein Gebäude mit einem in der Gebäudewand gehaltenen Schutzrohr (1) aus Metall und einem in diesem geführten Innenrohr (6), etwa gleicher Länge, welches an seinem äußeren Ende mit der Zufuhrleitung verbindbar ist, dadurch gekennzeichnet, daß das Mündungsende des ebenfalls aus Metall bestehenden Innenrohres (6) als Topfkolben (8) mit wenigstens einer Querbohrung (9) ausgebildet ist, daß der Topfkolben (8) im Schutzrohr (1) vor und hinter der Querbohrung (9) abgedichtet axial beweglich geführt ist, daß er in seiner Ausgangsstellung (Offenstellung) mit seiner Querbohrung (9) mit einer Wandungsöffnung (10) im Schutzrohr (1), an die die Gebäudeleitung anschließbar ist, in Verbindung steht, daß vom Kopf des Topfkolbens (8) eine Kolbenstange (13) ausgeht, die in einer Öffnung (4) einer stirnseitigen Abschlußwand (3) des Schutzrohres (1) abgedichtet geführt ist, daß die Kolbenstange (13) eine endseitige Anschlagplatte (16) aufweist, deren Abstand von der Anschlagfläche am Schutzrohr (1) in der Ausgangsstellung des Topfkolbens (8) größer ist als der Verschiebeweg des Topfkolbens (8) aus der Ausgangs- in die Schließstellung und daß an der Kolbenstange (13) an ihrem freien Ende eine in Achsrichtung sich erstreckende Skala (17) zur Stellungsanzeige angebracht ist.

2. Armatur nach Anspruch 1, dadurch gekennzeichnet, daß die Kolbendichtungen aus in der Innenwandung des Schutzrohres (1) vor und hinter der Wandungsöffnung (10) befindlichen Ringnuten (11) und je einem in diesen gehaltenen Dichtring (12) aus elastischem Material gebildet sind.

3. Armatur nach Anspruch 1 oder 2, dadurch gekennzeichnet, daß der Topfkolben (8) mit seinem offenen Endabschnitt formschlüssig auf das Innenrohr (6) aufgesetzt und an diesem durch Verschweißen befestigt ist.

4. Armatur nach einem der Ansprüche 1 bis 3, dadurch gekennzeichnet, daß am äußeren Ende des Schutzrohres (1) an diesem ein Schraubring (18) mittels Außengewinde in einem entsprechenden Innengewinde des Schutzrohres (1) gehalten ist, der das Innenrohr (6) mit Spiel umschließt und wenigstens eine Innennut (19) aufweist, in der ein auf die Mantelfläche des Innenrohres (6) einwirkender elastischer Dichtring gehalten ist.

5. Armatur nach einem, der Ansprüche 1 bis 4, dadurch gekennzeichnet, daß die Wandungsöffnung (10) im Schutzrohr (1) als Bohrung mit etwa gleichem Durchmesser wie die Querbohrung (9) im Topfkolben (8) ausgebildet ist und in einen äußeren, radial stehenden Anschlußstutzen (2) übergeht.

6. Armatur nach einem der Ansprüche 3 bis 5, dadurch gekennzeichnet, daß Topfkolben (8) und Kolbenstange (13) einteilig ausgebildet sind.

7. Armatur nach einem der Ansprüche 1 bis 6, dadurch gekennzeichnet, daß an der Abschlußwand (3) des Schutzrohres (1) koaxial zur öffnung (4) ein Stutzen (5) mit Gewinde angeformt ist und daß in einem Ringspalt zwischen Kolbenstange (13) und Stutzen (5) eine Dichtung (14) aus feuerfestem Material einliegt, die mit Hilfe einer Mutter, wie z.B. eine überwurfmutter (15) axial zusammendrückbar ist.

## Claims

1. Fitting for introducing a gas or water supply pipeline into a building, with a metallic protective pipe (1) which is retained in the building wall and an inner pipe (6) of roughly the same length which is led in the latter and can be connected at its outer end to the supply pipeline, characterised in that the mouthpiece end of the inner pipe (6), which is likewise composed of metal, is designed as a cup piston (8) with at least one cross-bore (9), that the cup piston (8) is led axially movably and sealed in front of and behind the cross-bore (9) in the protective pipe (1), that in its initial position (open position) it is in communication by its cross-bore (9) with a wall opening (10) in the protective pipe (1), to which the building pipeline can be connected, that from the head of the cup piston (8) there emanates a piston rod (13), which is led sealed in an opening (4) of a front-end closing wall (3) of the protective pipe (1), that the piston rod (13) has an end-sided stop plate (16), whose spacing from the stop surface on the protective pipe (1) in the initial position of the cup piston (8) is larger than the path of movement of the cup piston (8) from the initial position into the closing position, and that a scale (17) for position display, which extends in axial direction, is mounted on the piston rod (13) at its free end.

2. Fitting as claimed in Claim 1, characterised in that the piston seals are formed from annular grooves (11), which are situated in the inside wall of the protective pipe (1) in front of and behind the wall opening (10), and from a sealing ring (12) of elastic material which is retained in each of these.

3. Fitting as claimed in Claim 1 or Claim 2, characterised in that the cup piston (8) is mounted by its open end section positively on the inner pipe (6) and is fastened to the latter by welding.

4. Fitting as claimed in one of the Claims 1 to 3, characterised in that at the outer end of the protective pipe (1) there is retained on the latter by means of an outer thread in a corresponding inner thread of the protective pipe (1), a screw ring (18) which encloses the inner pipe (6) with clearance and has at least one inner groove (19) in which is retained an elastic sealing ring which acts upon the surface area of the inner pipe (6).

5. Fitting as claimed in one of the Claims 1 to 4, characterised in that the wall opening (10) in the protective pipe (1) is constructed as a bore with roughly the same diameter as the cross-bore (9) in the cup piston (8) and turns into an outer radially standing connecting socket (2).

6. Fitting as claimed in one of the Claims 3 to 5, characterised in that the cup piston (8) and piston rod (13) are constructed as one part.

7. Fitting as claimed in one of the Claims 1 to 6, characterised in that a socket (5) with a thread is formed on the sealing wall (3) of the protective pipe (1) coaxially to the opening (4), and that there rests in an annular gap between the piston rod (13) and the socket (5) a seal composed of fire-resistant material which, with the aid of a nut, such as for example, a sleeve nut (15), can be axially compressed.

## Revendications

1. Armature d'introduction d'un conduit de gaz ou d'eau dans un bâtiment, comprenant un tube de protection (1) en métal maintenu dans le mur du bâtiment et un tube interne (6) monté à l'intérieur, sensiblement de même longueur, qui peut être relié à son extrémité externe avec la conduite d'amenée, caractérisée en ce que l'extrémité d'embouchure du tube interne (6) réalisé également en métal est constituée sous forme d'un piston creux (8) avec au moins un alésage transversal (9), en ce que le piston creux (8) peut se déplacer axialement et de façon étanche à l'avant et à l'arrière de l'alésage transversal (9), en ce qu'il est en liaison dans sa position de départ (position ouverte) par son alésage transversal (9) avec une ouverture (10) de la paroi du tube de protection (1) auquel peut alors être raccordée la conduite dans le bâtiment, en ce qu'une tige de piston (13) s'étend à partir de la tête du piston creux (8), qui passe de façon étanche dans une ouverture (4) d'une paroi de fermeture (3) située sur le côté frontal du tube de protection (1), en ce que la tige de piston (13) comprend une plaque de butée (16) à son extrémité, dont la distance qui la sépare de la surface de butée du tube de protection (1) est supérieure dans la position de départ du piston creux (8) à la course du piston creux (8) depuis sa position de départ vers sa position de fermeture, et en ce qu'une échelle (17) s'étend sur son extrémité libre dans la direction axiale pour indiquer sa position.

2. Armature selon la revendication 1, caractérisée en ce que les garnitures d'étanchéité du piston sont formées par des rainures annulaires (11) constituées dans la paroi interne du tube de protection (1) à l'avant et à l'arrière de l'ouverture (10) dans la paroi et par un joint torique (12) en un matériau élastique disposé dans chacune de ces rainures.

3. Armature selon la revendication 1 ou 2, caractérisée en ce que le piston creux (8) est monté par sa section d'extrémité ouverte par concordance de formes sur le tube interne (6) et fixé à ce dernier par soudage.

4. Armature selon l'une quelconque des revendications 1 à 3, caractérisée en ce qu'une bague filetée (18) est montée à l'extrémité externe du tube de protection (1) par un filetage externe coopérant avec un filetage interne correspondant du tube de protection (1), cette bague filetée entourant avec un certain jeu le tube interne (6) et comprenant au moins une rainure annulaire (19) dans laquelle est disposé un joint torique élastique agissant sur la surface d'enveloppe du tube interne.

5. Armature selon l'une quelconque des revendications 1 à 4, caractérisée en ce que l'ouverture (10) de la paroi du tube de protection (1) est constituée sous forme d'un alésage ayant approximativement le même diamètre que l'alésage transversal (9) du piston creux (8) et se prolonge par une tubulure de raccordement extérieure (2) orientée radialement.

6. Armature selon l'une quelconque des revendications 3 à 5, caractérisée en ce que le piston creux (8) et la tige (13) du piston sont constitués d'un seul tenant.

7. Armature selon l'une quelconque des revendications 1 à 6, caractérisée en ce qu'une tubulure (5) comprenant un filetage est formée sur la paroi de fermeture (3) du tube de protection (1) coaxialement à l'ouverture (4) et en ce qu'une garniture (14) en un matériau ignifuge est disposée dans un interstice annulaire entre la tubulure (5) et la tige (13) du piston, qui peut être comprimée axialement à l'aide d'un écrou tel qu'un écrou d'accouplement (15).
